Europäisches Patentamt

European Patent Office

Office européen des brevets

(11) Publication number: **0 060 470**
**B1**

(12) **EUROPEAN PATENT SPECIFICATION**

(45) Date of publication of patent specification: **20.03.85**

(51) Int. Cl.⁴: **G 01 N 29/04**

(21) Application number: **82101768.8**

(22) Date of filing: **16.04.80**

(60) Publication number of the earlier application in accordance with Art. 76 EPC: **0 018 747**

(54) Method and apparatus for non-destructive inspection of tyres.

(30) Priority: **19.04.79 US 31961**
**19.04.79 US 31962**
**19.04.79 US 31963**

(43) Date of publication of application:
**22.09.82 Bulletin 82/38**

(45) Publication of the grant of the patent:
**20.03.85 Bulletin 85/12**

(84) Designated Contracting States:
**AT BE CH DE FR GB IT LI LU NL SE**

(56) References cited:
**GB-A-1 385 738**
**US-A-2 378 237**
**US-A-3 882 717**
**US-A-3 948 094**

(73) Proprietor: **BANDAG, INCORPORATED**
**Bandag Center**
**Muscatine, Iowa 52761 (US)**

(72) Inventor: **Dugger, Doyle Lawrence**
**Rural Route 6 Box 103A**
**Muscatine Iowa (US)**

(74) Representative: **Smith, Norman Ian et al**
**F.J. CLEVELAND & COMPANY 40-43 Chancery Lane**
**London WC2A 1JQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention is generally directed to methods and apparatus for non-destructive inspection of rubber tires. Such inspection techniques may also be combined with conventional tire buffing operations in accordance with this invention.

The invention here claimed is directed to certain mechanical features of the preferred embodiment.

There has long been an urgent need for cost effective, efficient, non-destructive inspection (NDI) of rubber tire casings. There are obvious safety benefits to be had by such techniques if they can be efficiently and rapidly practiced. There are also potential economic benefits. For example, during tire retreading operations, a defective tire carcass can be discarded before wasting further expenditures of time and money if it can be accurately, efficiently and quickly detected.

In fact, the need for improved NDI methods and apparatus relating to the testing of tire casings is so great that the U.S. Army Materials and Mechanics Research Center has sponsored special symposia devoted entirely to this subject in 1973, 1974, 1976 and 1978. The proceedings of the first three of these symposia have now been published and are available from the National Technical Information Service. They each include a complete chapter on ultrasonic tire testing as well as other chapters devoted to different tire testing procedures (e.g. holographic, infrared and X-ray). There are also many prior art patents relating generally to the use of ultrasonic waves to non-destructively test pneumatic tire casings. For example:

U.S. Pat. No. 2,345,679 — Linse (1944),
U.S. Pat. No. 2,378,237 — Morris (1945),
U.S. Pat. No. 3,336,794 — Wysoczanski et al. (1967),
U.S. Pat. No. 3,604,249 — Wilson (1971),
U.S. Pat. No. 3,815,407 — Lavery (1974),
U.S. Pat. No. 3,882,717 — McCauley (1975),
U.S. Pat. No. 4,059,989 — Halsey (1977).

There are also several prior art patents relating to mechanical structures for chucking or otherwise physically handling pneumatic tire casings during various types of non-destructive testing or manufacturing processes. For example:

U.S. Pat. No. 2,695,520 — Karsai (1954),
U.S. Pat. No. 3,550,443 — Sherkin (1970),
U.S. Pat. No. 3,948,094 — Honlinter (1976),
U.S. Pat. No. 4,023,407 — Vanderzee (1977).

Although a wide variety of non-destructive ultrasonic tests have been performed on tires in the past as shown by these prior art patents, they have each suffered serious deficiencies and have failed to achieve widespread acceptance in commercial practice.

Prior tire chucking mechanisms in general have included axially movable tire mounting rims for quickly mounting and inflating a test tire. Prior NDI machines have located an ultrasonic transmitter inside a rotatable inflated, tire, albeit such have been only fixed or manually adjustable mounting arrangements. Other NDI machines have included articulated transmitter mounting arrangement in conjunction with a spread-open non-inflated test tire. However, there has not yet been a commercially viable mechanism arrangement for quickly positioning ultrasonic transducers about an inflated test tire wall while at the same time facilitating quick tire mounting/demounting procedures and also protecting the transducers from physical harm.

It has been discovered that these earlier attempts at ultrasonic non-destructive inspection of tire casings can be considerably improved and made more commercially viable.

According to one aspect of the present invention there is provided a non-destructive tire testing apparatus having an ultrasonic acoustic transmitter and an ultrasonic acoustic receiver opposingly mounted on the inside and outside respectively of a relatively movable inflated tire wall so as to obtain and display a measurement of the condition of the thus tested portion of the tire wall, said apparatus being characterised by opposing circular rings adapted to sealingly engage the corresponding rims of the tire when placed therebetween, and adjustable transmitter means mechanically mounted between said rings for retracting said transmitter radially toward the center of the circular rings while mounting and demounting the tire from between said rings and for extending said transmitter radially away from the center of the circular rings and toward the tire tread wall to a fixed active position during a testing cycle.

According to another aspect of the present invention there is provided a non-destructive tire testing method utilizing an ultrasonic acoustic transmitter and an ultrasonic acoustic receiver opposingly mounted on the inside and outside respectively of a relatively movable inflated tire wall so as to obtain and display a measurement of the condition of the thus tested portion of the tire wall, said method being characterised by, sealingly engaging the corresponding rims of the tire with opposing circular rings when placed therebetween, and retracting said transmitter radially toward the center of the circular rings while mounting and demounting the tire from between said rings and extending said transmitter radially away from the center of the circular rings and toward the tire tread wall to a fixed active position during a testing cycle.

The use of an inflated tire in the preferred embodiment has been discovered to assist in maintaining a true running tire surface and thus avoids signal variations that might otherwise be caused by wobbling or other relative axial motions of the tire walls during rotating. The inflated tire is also useful in helping to at least partially stress the tire walls, as they will be stressed during normal use, and to open up leakage passageways through the tire walls so that they may be detected by ultrasonic detection of air passing therethrough. Approximately only five psi is needed to maintain a stable inflated tire structure. However, it has been discovered that improved signal transmission and overall performance occurs if the tire is inflated within the range of approximately 1.034—1.241 bar.

Although it may not be required, it is preferred that the outer treadwall of the tire under inspection first be buffed to present a uniform surface thus minimizing spurious defect indications that might otherwise be caused by tread patterns and/or by uneven wear spots or patterns in the outer treadwall surface of the tire. In this connection, the tire buffing apparatus and method may be advantageously employed in combination with the ultrasonic non-destructive testing method and apparatus to present a unified, convenient and efficient overall operation. Since such a buffing operation is necessarily involved in tire retreading operations anyway, this combination particularly attractive where the tire carcasses are being inspected in preparation for retreading. Apparatus incorporating buffing means is described and claimed in EP—A—0069402).

The preferred exemplary embodiment of this invention includes special mechanical features for automatically moving the acoustic transducers into and out of operative position with respect to the inflated tire walls. During tire mounting and demounting operations, the acoustic transmitters are retracted inwardly both radially and axially with respect to at least one tire mounting ring or flange so as both to facilitate the tire mounting and demounting operations and to protect the acoustic transmitters from possible physical damage. During or after tire inflation, these acoustic transmitters are moved radially outwardly inside the inflated tire into an operative position with respect to the inside tire walls. At the same time, the array of acoustic receivers is moved radially inwardly towards the outer inflated tire walls to a desired operative position. Apparatus incorporating adjustable transmitter means is described and claimed in EP—A—0060470).

In the preferred exemplary embodiment, the relative axial movement of the acoustic transmitters with respect to a tire mounting flange or ring is achieved by spring loading the tire ring so that it axially moves away from the acoustic transmitters thereby uncovering them during the tire mounting operation and thus providing proper clearance for subsequent radially outward movement into the inflated tire carcass. Such spring loading also helps in properly seating the tire rims with the mounting flanges or rings during mounting and inflation operations.

The present Application is divided out from EP—A—0018747 which describes and claims a tire testing apparatus and method. Reference is also made to EP—A—0060469 and EP—A—0061045 which also describe and claim tire testing apparatus and methods.

These and other objects and advantages of this invention will be better appreciated by reading the following detailed description of the presently preferred exemplary embodiment in conjunction with the accompanying drawings, of which:

Figures 1 and 2 are perspective views of a combined NDI/buffer machine constructed in accordance with this invention;

Figure 3 is a block diagram of the invention shown in Figures 1 and 2;

Figure 4 is a block diagram of the ultrasonic NDI circuits which may be used in the NDI/buffer machine of Figures 1 to 3 or in a machine having only NDI capabilities; and

Figure 5 is a detailed cut-away cross-sectional view of the fixed spindle and transmitter mounting arrangement used in the embodiment of Figures 1 and 2.

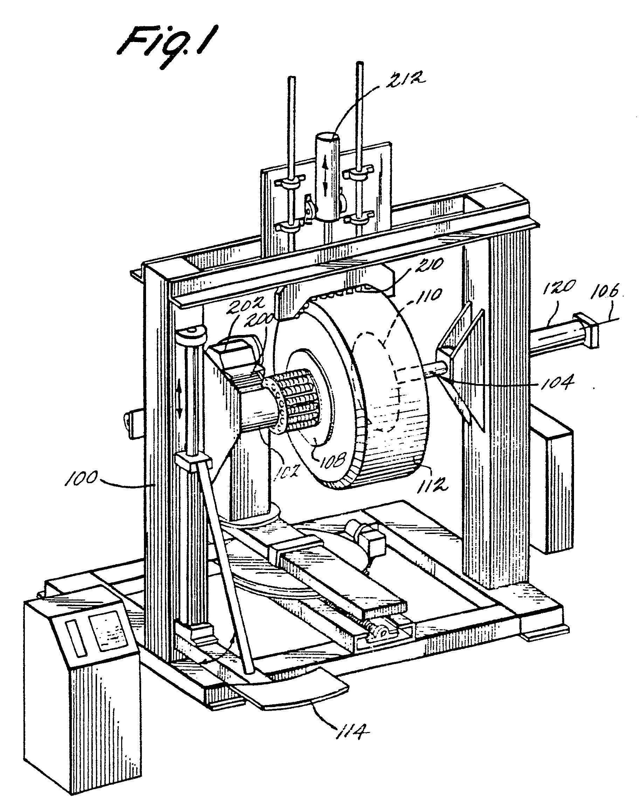

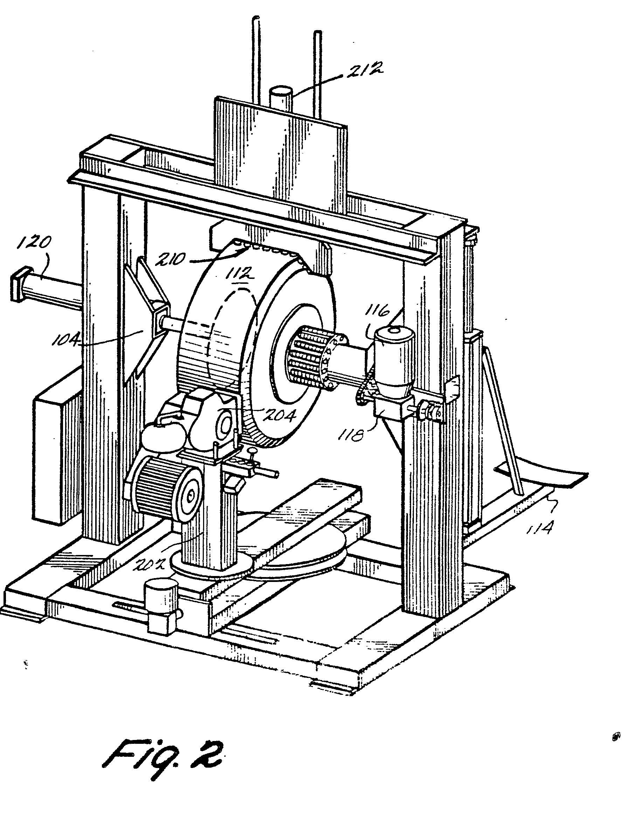

Referring to Figures 1 and 2, two perspective views of the presently preferred exemplary combined tire buffer and NDI machine are shown. As will be apparent, the NDI features of the machine may be provided, if desired, without including the tire buffer capability.

The major mechanical components of the machine are mounted to an open frame 100 having a fixed spindle 102 and an axially movable spindle 104 opposingly aligned along horizontal axis 106.

Conventional circular tire mounting rings or flanges 108 and 110 are attached to the outer rotatable ends of spindles 102 and 104 for mounting an inflated tire 112, therebetween. A conventional pneumatically operated tire lift mechanism 114 is conveniently provided so as to assist the human operator in lifting and swinging a tire into and out of place between rings 108 and 110 during tire mounting and demounting operations.

Ring 108, and hence tire 112, is driven by a two horsepower d.c. motor 116 through reducing gears 118. A tire surface speed of approximately 182.9 metres per minute is preferred for buffing operations while a much lower speed of approximately 12.2 metres per minute is preferred for NDI operations. Spindle 104, and hence ring 110, is axially extended and retracted by pneumatic cylinder 120. During tire mounting operations, ring 110 is retracted by cylinder 120 so as to permit the tire 112 to be lifted into place on ring 108 by lift 114. Thereafter, ring 110 is extended against the corresponding rim of tire 112 and the tire is inflated to a desired set point pressure by compressed air passed through the center of spindle 102.

A conventional rotating tire buffing rasp 200 is mounted on a vertical pedestal 202 situated on the backside of the machine as seen in Figure 2. The rasp 200 is controlled via a conventional panel 204 to move laterally along a desired buffing path 206 and horizontally towards and away from the tire by conventional control mechanisms including a "joy stick" used to control lead screws and associated drive motors and the like. The buffer rasp 200 is rotated by a separate motor mounted on pedestal 202. The buffer mechanism, per se, is of a conventional type as marketed by Bandag, Inc., e.g. Buffer Model No. 23A.

An array of 16 ultrasonic acoustic receiving transducers 210 is disposed above and around the outer walls of tire 112. The receivers 210 preferably include a conically shaped collimator and/or focusing tube to help limit the field of view for each individual transducer to a relatively small and unique area across the tire wall. The receivers 210 may be conveniently potted either individually or in groups in a polyurethane foam or the like to help mechanically fix the receivers in their respective desired positions, to help protect the receivers and to help isolate the receivers from spurious ambient acoustic signals. The array of receivers 210 is radially adjusted into operative position by an air cylinder 212 having a coupled hydraulic control cylinder so as to define a radially extended operative position for the receivers 210.

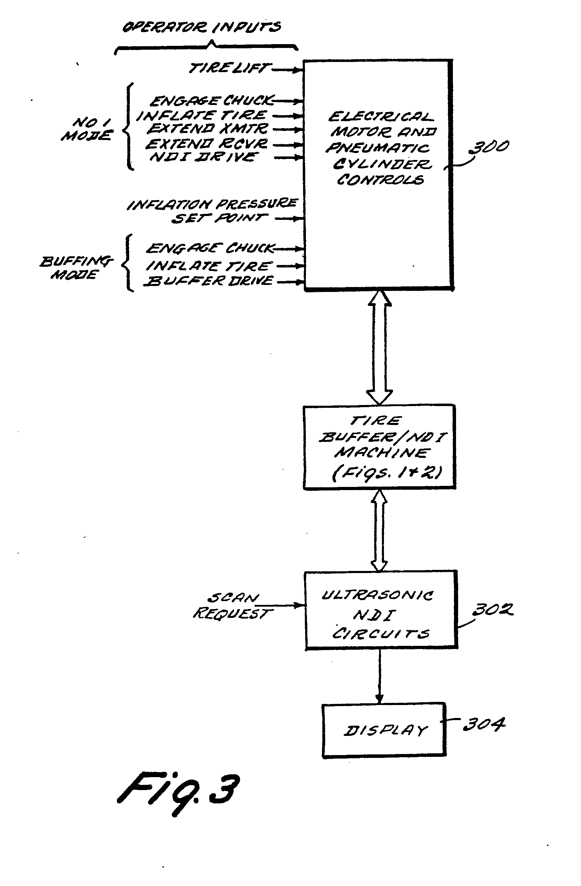

A block diagram of the combined tire buffer/NDI machine and its associated electrical and pneumatic circuits is shown in Figure 3. The electrical motor and pneumatic cylinder controls 300 are of entirely conventional design and thus not shown in detail. Operator inputs depicted at the left of Figure 3 are made directly or indirectly by the operator via conventional electrical switchs, relays, air valves and/or liquid control valves.

In operation, a tire is placed on lift 114 and raised into position between the rings 108 and 110. Preferably, a predetermined index position on the tire is aligned with a physical index position on flange 108. Thereafter, the chucking apparatus is engaged by causing flange 110 to move into the tire 112 so as to pinch the tire beads together in preparation for tire inflation. The tire is then inflated to a desired set point pressure. As will be explained in more detail below, the flange 108 is spring loaded such that during chuck engagement and tire inflation, it is caused to move axially outwardly against the spring-loading (e.g. by approximately 5.1 centimetres). This facilitates the tire inflation process and simultaneously uncovers an ultrasonic transmitter located within the tire from a relatively protected position so that it may subsequently be extended into an operative position under the array of receivers 210. An interlock switch activated by air pressure and/or by the physical movement of flange 108 may be used to prevent any premature extension of the transmitter before it is uncovered from its protected position.

In the buffing mode, the transmitter need not be extended. The buffing rasp drive motors are conventionally activated and controlled (e.g. with a "joy stick" and conventional push button controls) to buff the tire tread surface as desired. Although it may not be required, it is presently preferred to have the tire buffed to a substantially uniform outer treadwall surface before NDI operations are performed. Such buffing is believed to avoid possible spurious indications of defects caused by normal tread patterns and/or by uneven wear about the tire surface.

When the operator selects the NDI mode of operation, an ultrasonic transmitter located inside the inflated tire 112 is extended into operative position and the array of receivers 210 is lowered into operative position by respectively associated pneumatic cylinders. The same d.c. motor which drives the tire at approximately 182.9 surface metres per minute during buffing operations may be reduced in speed by conventional electrical circuits so as to drive the tire at approximately 12.2 surface metres per minute during the NDI mode. After the tire motion has reached a steady state, the operator may activate the scan request input switch to the ultrasonic NDI circuits 302. Thereafter the walls of tire 112 will be ultrasonically inspected during one or more complete tire revolutions to produce a display 304 which can be humanly interpreted directly or indirectly to reveal the condition of the tire (e.g. satisfactory for further buffing and retreading, doubtful or unsatisfactory).

If questionable condition is indicated, the tire may be discarded or may be additionally buffed and retested.

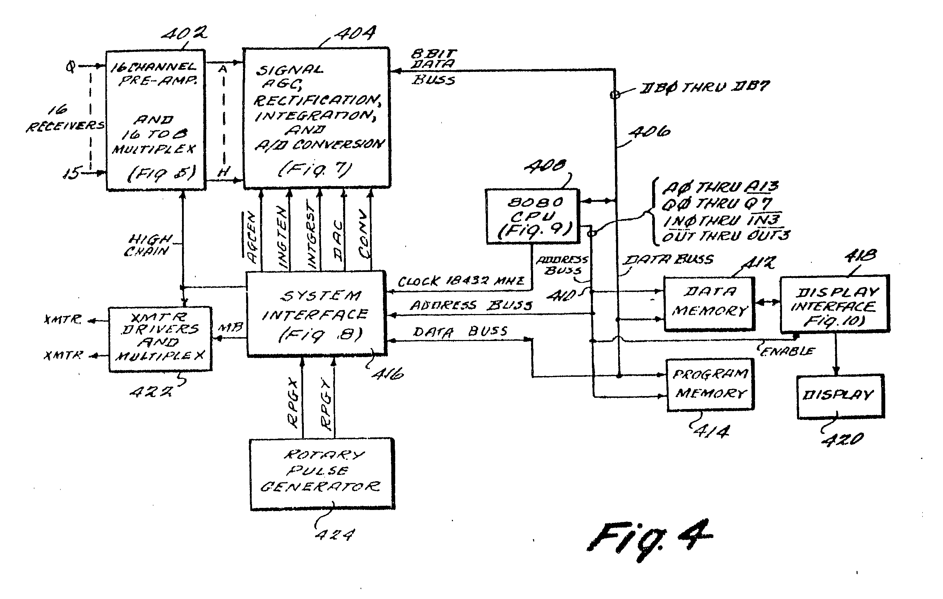

The ultrasonic NDI circuits 302 are shown in greater detail at Figure 4. The outputs from the 16 ultrasonic receivers 210 are amplified and multiplexed onto eight signal processing channels A—H by circuits 402. Each signal processing channel then provides AGC amplification, rectification, integration and analog-to-digital conversion with the signal processing circuitry 404. The resulting digitized outputs are presented to a conventional eight bit data bus 406 which is interconnected to a conventional micro-computer CPU (e.g. an 8080 type of eight bit computer) 408. The CPU 408 is also connected via a conventional address bus 410 and data bus 406 to a data memory 412, to a programmable read-only memory (PROM) 414 and to a system interface circuit 416. A display interface 418 is directly connected to the data memory banks 412 to provide a CRT type of oscilloscope display.

The system interface 416 provides the necessary gating and other control signals to the signal processing circuitry 404 and also provides HIGH CHAN multiplexing signals to the preamplifier circuits 402 as well as to the transmitter drivers and multiplexing circuitry 422 used to drive plural ultrasonic transmitters. The operation of the entire system is synchronized to the rotational movements of tire 112 through a rotary pulse generator 424 directly driven with the tire (e.g. geared to the reducer gears). The rotary pulse generator 424 provides 1,024 pulses per revolution at terminal RPGX and 1 pulse per revolution at terminals RPGY.

Ultrasonic acoustic transmitting crystals 500 and 502 are disposed inside inflated tire 112, which is chucked between rings 108 and 110, rotatably secured to spindles 102 and 104, respectively. The electrical leads feeding transmitters 500 and 502 are fed out through the fixed spindle 102 to the transmitter activation circuits. Inflation air is likewise fed in through the center of spindle 102 as are pneumatic lines and/or other control connections for extending and retracting the transmitters.

The exemplary ultrasonic transmitters 500 and 502 have a radiation field which substantially illuminates a sector of approximately 90°. Hence, they are mounted at 90° with respect to one another on block 504 which may, for example, be formed from polyvinyl chloride plastic materials. It has been found that acceptable operation will not result if the transmitters are too close to the inside tire surfaces or too far away from the surfaces. In the preferred exemplary embodiment, transmitting crystals 500 and 502 are approximately 5.1 centimetres from the inner tire wall surfaces although this optimum distance of separation may be varied by a considerable amount (e.g. plus or minus approximately one inch).

The arrayed receiving transducers 210 are located about an arc generally corresponding to the outside shape of the tire wall. Here again, it has been found that acceptable operation does not result if the receivers are too close or too far away from the outer tire walls. Preferably, the receivers are no closer than approximately 2.5 centimetres to the outer tire surface but are preferably within 14.0 to 21.6 centimetres of the opposingly situated transmitting crystal. The receiving transducers 210 preferably each employ a conically shaped collimator and/or focusing tube. These tubes are preferably machined from polyvinyl chloride plastic material and also help to match the impedance of the actual transducer crystal surface to the surrounding ambient air acoustic impedance.

A moderately high ultrasonic frequency is employed so as to help avoid interference from spurious ambient acoustic signals and to obtain increased resolution by using shorter wavelength acoustic signals while at the same time avoiding ultra-high frequency acoustic signals and the problems associated therewith. Frequencies above 40 kHz are desirable with 75 kHz being chosen as the presently preferred optimum frequency.

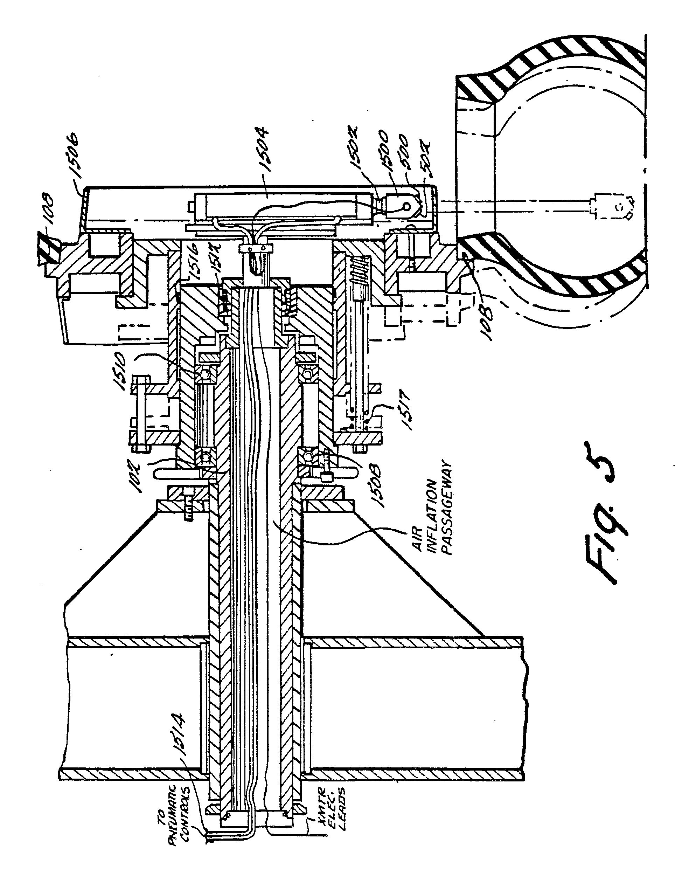

Greater detail of the fixed spindle 102 and of the associated transmitter mounting arrangement is shown in the cross-section of Figure 5. The transmitting crystals 500 and 502 are directed at 90° with respect to one another from the face of a PVC mounting block 1500. The block 1500 is, in turn, attached to a retractable rod 1502 connected to the piston of a pneumatic cylinder 1504.

As shown in Figure 5, the pneumatic cylinder 1504 has retracted the transmitting crystals 500 and 502 into a protected area defined by an annular plate 1506 attached to the tire mounting ring or flange 108. The tire mounting ring 108 is rotatably secured to the fixed spindle 102 through ball-bearing assemblies 1508 and 1510. This rotatable connection is maintained airtight by rotating seal assembly 1512. The center of the spindle 102 is hollow so as to permit passage of pneumatic control line 1514 and of the transmitter electrical leads therethrough.

The rotating ring 108 and its connected assembly is spring-loaded via spring 1517 to its axially extended position as shown in Figure 5. However, the ring 108 may be moved axially to the position shown in dotted lines against the spring force. In the preferred exemplary embodiment, such motion begins to occur when the ring 108 has approximately 1500 lbs. of lateral force applied thereto. The sliding joint which permits such motion is also maintained air tight by "O" ring 1516. In the exemplary embodiment no more than approximately two inches of axial movement are permitted before the spring force is sufficient to resist further movement even when the tire is inflated to approximately 1.034—1.241 bar.

When the ring 108 is axially moved to the left as shown by dotted lines in Figure 5 against the force of spring 1517, transmitters 500 and 502 are then exposed and the pneumatic cylinder 1504 can be activated to extend the transmitter into the position shown by dotted lines in Figure 5 for an operative measurement cycle. Suitable interlocking switches activated by the internal pressure of the inflated tire and/or by the physical axial position of ring 108 can be employed to insure that pneumatic cylinder 1504 is not erroneously extended and damaged while the transmitters 500 and 502 are still enclosed and protected by the flange 1506.

**Claims**

1. A non-destructive tire testing apparatus having an ultrasonic acoustic transmitter (500, 502) and an ultrasonic acoustic receiver (210) opposingly mounted on the inside and outside respectively of a relatively movable inflated tire wall (112) so as to obtain and display (420) a measurement of the condition of the thus tested portion of the tire wall, said apparatus being characterised by, opposing circular rings (108, 110) adapted to sealingly engage the corresponding rims of the tire when placed therebetween, and adjustable transmitter mounting means (1504, 1502, 1500) mechanically mounted between said rings for retracting said transmitter radially toward the center of the circular rings while mounting and demounting the tire from between said rings and for extending said transmitter radially away from the center of the circular rings and toward the tire tread wall to a fixed active position during a testing cycle.

2. A non-destructive tire testing apparatus as in claim 1 further characterised by tire inflation means (102) for inflating said tire after engagement by said rings, at least one ultrasonic acoustic receiver (210) being disposed for operation outside said tire, at least one ultrasonic acoustic transmitter (500, 502) being disposed for operation inside said tire, and said receiver and transmitter being fixed with respect to one another and relative to the environment of said apparatus during a testing cycle.

3. A non-destructive tire testing apparatus as in claim 2 further characterised by a plurality of ultrasonic acoustic receivers (210) relatively disposed in an array generally conforming to the outside cross-sectional shape of said tire, and adjustable receiver mounting means (212) disposed for retraction of said receivers radially away from said circular rings while mounting and demounting the tire from between the rings and for extending said receivers radially toward said circular rings during a measurement cycle.

4. A non-destructive tire testing apparatus as claimed in any one of claims 1 to 3 further characterised by during testing, said transmitter being disposed at approximately 5.1 ± 2.5 cm (2 ± 1 inches) from the inside tire wall surface and said receivers being disposed at approximately 14.0 to 21.6 cm from said transmitter.

5. A non-destructive tire testing apparatus as claimed in any one of claims 2 to 4 being further characterised by said tire inflation means inflating said tire to a pressure approximately 1.034—1.241 bar (15 to 18 psi).

6. A non-destructive tire testing apparatus as claimed in any one of claims 1 to 5 further characterised by means (1516) permitting relative transmitter movement with respect to at least one of said rings in a direction generally perpendicular thereto, wherein said adjustable transmitter mounting means is, when in its radially retracted position, also moved axially with respect to at least one of said rings so as to facilitate the tire mounting operation without damage to said transmitter.

7. A non-destructive tire testing apparatus as claimed in claim 6 including tire inflation means for inflating the tire to a pressure of at least 0.345 bar (5 psi) after engagement by said rings.

8. A non-destructive tire testing apparatus as claimed in any one of claims 1 to 7 further characterised by means (212) for retracting of said receiver radially away from said circular rings while mounting and demounting the tire from between the rings and extending said receiver radially toward said circular rings during a measurement cycle.

9. A non-destructive tire testing method utilizing an ultrasonic acoustic transmitter (500, 502) and an ultrasonic acoustic receiver (210) opposingly mounted on the inside and outside respectively of a relatively movable inflated tire wall (112) so as to obtain and display (420) a measurement of the condition of the thus tested portion of the tire wall, said method being characterised by sealingly engaging the corresponding rims of the tire with opposing circular rings (108, 110) when placed therebetween, and retracting said transmitter radially toward the center of the circular rings while mounting and demounting the tire from between said rings and extending said transmitter radially away from the center of the circular rings and toward the tire tread wall to a fixed active position during a testing cycle.

10. A method as claimed in claim 9 further characterised by said transmitter, when in its radially retracted position, being also moved axially with respect to at least one of said rings so as to facilitate the tire mounting operation without damage to said transmitter.

11. A method as claimed in claim 9 or claim 10 further characterised by inflating said tire to at least 0.345 bar (5 psi) after engagement by said rings, and said receiver and transmitter being fixed with respect to one another and relative to the environment of said apparatus during said measurement cycle.

12. A method as claimed in any one of claims 9 to 11 further characterised by retracting said receiver radially away from said circular rings while mounting and demounting the tire from between the rings and extending said receiver radially toward said circular rings during a measurement cycle.

13. A method as claimed in claim 12 further characterised by during a measurement cycle said transmitter being disposed at approximately 5.1 ± 2.5 cm (2 ± 1 inches) from the inside tire wall surface and said receiver being disposed at approximately 14.0 to 21.6 cm from said transmitter.

**Patentansprüche**

1. Einrichtung zur zerstörungsfreien Reifenprüfung mit einem akustischen Ultraschallsender (500, 502) und einem akustischen Ultraschallempfänger (210), die gegenüberstehend an Innen- bzw. Außenseite einer relativ (dazu) bewegbaren aufgepumpten Reifenwand (112) montiert sind, um eine Messung des Zustands des so geprüften Bereichs der Reifenwand zu gewinnen und anzuzeigen (bei 420), gekennzeichnet durch einander gegenüberstehende kreisförmige Ringe (108, 110), die unter Abdichtung an entsprechenden Rändern (Wülsten) des zwischen ihnen eingesetzten Reifens anzugreifen vermögen, und eine verstellbare Sender-Halterungseinrichtung (1504, 1502, 1500), die mechanisch zwischen den Ringen montiert ist, um den Sender beim Einsetzen und Herausnehmen des Reifens zwischen die Ringe bzw. den Ringen in Radialrichtung zum Zentrum der kreisförmigen Ringe zurückzuziehen und den Sender während eines Meßzyklus in Radialrichtung vom Zentrum der kreisförmigen Ringe hinweg und auf die Reifenlauffläche vorzuschieben oder auszufahren.

2. Einrichtung zur zerstörungsfreien Reifenprüfung nach Anspruch 1, gekennzeichnet durch eine Reifenaufpumpeinrichtung (102) zum Aufpumpen des Reifens nach seinem Einspannen mittels der Ringe, mindestens einen betrieblich an der Außenseite des Reifens angeordneten akustischen Ultraschallempfänger (210) und mindestens einen betrieblich innerhalb des Reifens angeordneten akustischen Ultraschallsender (500, 502), sowie dadurch, daß Sender und Empfänger während eines Meßzyklus zueinander und relativ zur Umgebung der Einrichtung festgelegt sind.

3. Einrichtung zur zerstörungsfreien Reifenprüfung nach Anspruch 2, gekennzeichnet durch mehrere akustische Ultraschallempfänger (210), die relativ zueinander in einer Reihe bzw. einem Feld entsprechend der Außenquerschnittsform des Reifens angeordnet sind, und eine verstellbare Empfänger-Halterungseinrichtung (212) zum Zurückziehen der Empfänger in Radialrichtung von den kreisförmigen Ringen beim Einsetzen und Herausnehmen des Reifens zwischen die bzw. zwischen den kreisförmigen Ringen und zum Vorschieben oder Ausfahren der Empfänger in Radialrichtung auf die kreisförmigen Ringe zu während eines Meßzyklus.

4. Einrichtung zur zerstörungsfreien Reifenprüfung nach einem der Ansprüche 1 bis 3, dadurch gekennzeichnet, daß während der Prüfung der Sender in einem Abstand von 5,1 ± 2,5 cm (2 ± 1 Zoll) von der Reifeninnenwandfläche und die Empfänger in einem Abstand von 14,0—21,6 cm vom Sender angeordnet sind.

5. Einrichtung zur zerstörungsfreien Reifenprüfung nach einem der Ansprüche 2 bis 4, dadurch gekennzeichnet, daß die Reifenaufpumpeinrichtung den Reifen mit einem Druck von ungefähr 1,034—1,241 bar (15—18 psi) aufpumpt.

6. Einrichtung zur zerstörungsfreien Reifenprüfung nach einem der Ansprüche 1 bis 5, gekennzeichnet durch eine Einrichtung (1516) zur Ermöglichung einer relativen Senderbewegung in bezug auf mindestens einen der Ringe in einer im wesentlichen senkrecht dazu liegenden Richtung, wobei die verstellbare Sender-Halterungseinrichtung, wenn sie sich in ihrer radial zurückgezogenen Stellung befindet, auch in Axialrichtung in bezug auf mindestens einen der Ringe bewegt wird, um den Reifen-Einsetz- oder -Aufmontiervorgang zu erleichtern, ohne den Sender zu beschädigen.

7. Einrichtung zur zerstörungsfreien Reifenprüfung nach Anspruch 6, gekennzeichnet durch eine Reifenaufpumpeinrichtung zum Aufpumpen des Reifens auf einen Druck von mindestens 0,345 bar (5 psi) nach seinem Einspannen mittels der Ringe.

8. Einrichtung zur zerstörungsfreien Reifenprüfung nach einem der Ansprüche 1 bis 7, gekennzeichnet durch eine Einrichtung (212) zum radialen Zurückziehen des Empfängers von den kreisförmigen Ringen hinweg beim Einsetzen und Herausnehmen des Reifens zwischen die Ringe bzw. zwischen den Ringen und zum radialen Vorschieben des Empfängers zu den kreisförmigen Ringen während eines Meßzyklus.

9. Verfahren zur zerstörungsfreien Reifenprüfung unter Verwendung eines akustischen Ultraschallsenders (500, 502) und eines akustischen Ultraschallempfängers (210), die gegenüberstehend an Innen- bzw. Außenseite einer relativ (dazu) bewegbaren aufgepumpten Reifenwand (112) montiert sind, um eine Messung des Zustands des so geprüften Bereichs der Reifenwand zu gewinnen und anzuzeigen (bei 420), dadurch gekennzeichnet, daß die betreffenden Ränder (Wülste) des Reifens unter Abdichtung zwischen gegenüberstehenden kreisförmigen Ringen (108, 110), wenn der Reifen dazwischen eingesetzt ist, eingespannt werden und der Sender während des Einsetzens und Herausnehmens zwischen die Ringe bzw. zwischen den Ringen radial in Richtung auf das Zentrum der kreisförmigen Ringe zurückgezogen und während eines Meßzyklus radial vom Zentrum der kreisförmigen Ringe hinweg und gegen die Reifenlauffläche in eine feste aktive Stellung vorgeschoben wird.

10. Verfahren nach Anspruch 9, dadurch gekennzeichnet, daß der Sender, wenn er sich in seiner radial zurückgezogenen Stellung befindet, auch axial gegenüber mindestens einem der Ringe bewegt wird, um den Reifeneinsetzvorgang ohne Beschädigung des Senders zu erleichtern.

11. Verfahren nach Anspruch 9 oder 10, dadurch gekennzeichnet, daß der Reifen nach dem Einspannen zwischen den Ringen auf mindestens 0,345 bar (5 psi) aufgepumpt wird und daß Empfänger und Sender während des Meßzyklus zueinander und relativ zur Umgebung der Einrichtung festgelegt werden.

12. Verfahren nach einem der Ansprüch 9 bis 11, dadurch gekennzeichnet, daß der Empfänger beim Einsetzen und Herausnehmen des Reifens zwischen die Ringe bzw. zwischen den Ringen radial von den kreisförmigen Ringen zurückgezogen und während eines Meßzyklus radial auf die kreisförmigen Ringe zu vorgeschoben oder ausgefahren wird.

13. Verfahren nach Anspruch 12, dadurch gekennzeichnet, daß der Sender während eines Meßzyklus in einem Abstand von ungefähr 5,1 ± 2,5 cm (2 ± 1 Zoll) von der Reifeninnenwandfläche und der Empfänger in einem Abstand von ungefähr 14,0—21,6 cm vom Sender angeordnet werden.

## Revendications

1. Appareil de contrôle non destructif de pneus comportant un transmetteur acoustique ultrasonique (500, 502) et un récepteur acoustique ultrasonique (210) montés en opposition l'un à l'autre sur l'intérieur et sur l'extérieur respectivement d'une paroi de pneu gonflé relativement mobile (112), de manière à fournir et à afficher (420) une mesure de l'état de la partie ainsi contrôlée de la paroi du pneu, caractérisé par des anneaux circulaires opposés (108, 110) propres à attaquer de manière étanche les bourrelets correspondants du pneu lorsqu'il est placé entre eux et un dispositif de montage de transmetteur réglable (1504, 1502, 1500) monté mécaniquement entre les anneaux pour rétracter le transmetteur radialement vers le centre des anneaux circulaires pendant le montage et le démontage du pneu entre ces anneaux et pour étendre le transmetteur radialement dans un sens s'écartant du centre des anneaux circulaires en direction de la paroi de la bande de roulement du pneu vers une position active fixée pendant un cycle de contrôle.

2. Appareil de contrôle non destructif de pneus suivant la revendication 1, caractérisé par un dispositif de gonflage de pneu (102) destiné à gonfler le pneu après engagement par les anneaux, au moins un récepteur acoustique ultrasonique (210) étant disposé de manière à fonctionner à l'extérieur du pneu, et au moins un transmetteur acoustique ultrasonique (500, 502) étant disposé de manière à fonctionner à l'intérieur du pneu, le récepteur et le transmetteur étant fixés l'un par rapport à l'autre et par rapport à l'environnement de l'appareil pendant un cycle de contrôle.

3. Appareil de contrôle non destructif de pneus suivant la revendication 2, caractérisé par plusieurs récepteurs acoustiques ultrasoniques (210) disposés les uns par rapport aux autres de manière à former une batterie qui épouse d'une manière générale la forme extérieure en coupe du pneu, et un dispositif de montage de récepteur réglable (212) disposé de manière à rétracter les récepteurs radialement à partir des anneaux circulaires pendant le montage et le démontage du pneu entre ces anneaux et pour étendre les récepteurs radialement vers les anneaux circulaires pendant un cycle de mesure.

4. Appareil de contrôle non destructif de pneus suivant l'une quelconque des revendications 1 à 3, caractérisé en outre en ce que, pendant le contrôle, le transmetteur est disposé à environ 5,1 + 2,5 cm de la surface interne de la paroi du pneu et les récepteurs sont disposés à environ 14,0 à 21,6 cm du transmetteur.

5. Appareil de contrôle non destructif de pneus suivant l'une quelconque des revendications 2 à 4, caractérisé en outre par le fait que le dispositif de gonflage gonfle le pneu à une pression d'environ 1,034 à 1,241 bar.

6. Appareil de contrôle non destructif de pneus suivant l'une quelconque des revendications 1 à 5, caractérisé en outre par un dispositif (1516) permettant un déplacement relatif du transmetteur par rapport à au moins un des anneaux dans une direction généralement perpendiculaire à celui-ci, le dispositif de montage de transmetteur réglable, lorsqu'il se trouve dans sa position rétractée radialement, étant aussi déplacé axialement par rapport à au moins un des anneaux de manière à faciliter l'opération de montage du pneu sans détérioration du transmetteur.

7. Appareil de contrôle non destructif de pneus suivant la revendication 6 comprenant un dispositif de gonflage de pneu pour gonfler le pneu à une pression d'au moins 0,345 bar après engagement par les anneaux.

8. Appareil de contrôle non destructif de pneus suivant l'une quelconque des revendications 1 à 7, caractérisé en outre par un dispositif (212) destiné à rétracter le récepteur radialement à partir des anneaux circulaires pendant le montage et le démontage du pneu entre les anneaux et à étendre le récepteur radialement vers les anneaux circulaires pendant un cycle de mesure.

9. Procédé de contrôle non destructif de pneus utilisant un transmetteur acoustique ultrasonique (500, 502) et un récepteur acoustique ultrasonique (210) montés en opposition sur l'intérieur et sur l'extérieur respectivement d'une paroi de pneu gonflé relativement mobile (112), de manière à fournir et à afficher (420) une mesure de l'état de la partie ainsi contrôlée de la paroi du pneu, caractérisé en ce qu'on engage de manière étanche les bourrelets correspondants du pneu au moyen d'anneaux circulaires opposés (108, 110) lorsque le pneu est placé entre eux et on rétracte le transmetteur radialement vers le centre des anneaux circulaires pendant le montage et le démontage du pneu entre les anneaux et on étend le transmetteur radialement à partir du centre des anneaux circulaires et en direction de la paroi de la bande de roulement du pneu vers une position active fixée pendant un cycle de contrôle.

10. Procédé suivant la revendication 9, caractérisé en outre en ce que le transmetteur, lorsqu'il se trouve dans sa position rétractée radialement, est aussi déplacé axialement par rapport à au moins un des anneaux, de manière à faciliter l'opération de montage du pneu sans détériorer le transmetteur.

11. Procédé suivant la revendication 9 ou 10, caractérisé en outre en ce qu'on gonfle le pneu au moins à 0,345 bar après engagement par les anneaux, le récepteur et le transmetteur étant fixés l'un par rapport à l'autre et par rapport à l'environnement de l'appareil pendant le cycle de mesure.

12. Procédé suivant l'une quelconque des revendications 9 à 11, caractérisé en outre en ce qu'on rétracte le récepteur radialement à l'écart des anneaux circulaires pendant le montage et le démontage du pneu entre les anneaux et on étend le récepteur radialement vers les anneaux circulaires pendant un cycle de mesure.

13. Procédé suivant la revendication 12, caractérisé en outre en ce que pendant un cycle de mesure, le transmetteur est disposé à environ 5,1 ± 2,5 cm à partir de la surface de la paroi interne du pneu et le récepteur est disposé à environ 14,0 à 21,6 cm du transmetteur.

# Fig.1

Fig. 2

OPERATOR INPUTS

TIRE LIFT →

NDI MODE {
ENGAGE CHUCK →
INFLATE TIRE →
EXTEND XMTR →
EXTEND RCVR →
NDI DRIVE →
}

INFLATION PRESSURE SET POINT →

BUFFING MODE {
ENGAGE CHUCK →
INFLATE TIRE →
BUFFER DRIVE →
}

ELECTRICAL MOTOR AND PNEUMATIC CYLINDER CONTROLS — 300

⇕

TIRE BUFFER/NDI MACHINE (Figs. 1 & 2)

⇕

SCAN REQUEST →

ULTRASONIC NDI CIRCUITS — 302

↓

DISPLAY — 304

# Fig. 3

Fig. 4

TO PNEUMATIC CONTROLS

*1514*

XMTR ELEC. LEADS

*102*

*1510*

*108*

*1506*

*1516*

*1512*

*1504*

*1508*

*1517*

AIR INFLATION PASSAGEWAY

*1502*

*1500*

*500*

*502*

*108*

Fig. 5

0 060 470